# EUROPEAN PATENT SPECIFICATION

(11) **EP 2 826 658 B1**
(45) Date of publication and mention of the grant of the patent: **15.11.2017**
(21) Application number: 14001163.6
(22) Date of filing: 28.03.2014
(51) Int. Cl.: B60K 28/10, B62D 25/10, B60R 21/34

(54) **Work machine**
Arbeitsmaschine
Machine de travail

(30) Priority: 18.07.2013 JP 2013149667
(43) Date of publication of application: 21.01.2015
(73) Proprietor: Kubota Corporation, Osaka 556-8601 (JP)
(72) Inventor: Takaoka, Masaki, Osaka, 590-0823 (JP); Fujiwara, Osami, Osaka, 590-0823 (JP)
(74) Representative: Müller-Boré & Partner Patentanwälte PartG mbB

(56) References cited:
- JP-A- H1 067 253
- JP-A- H08 268 105
- JP-A- 2005 029 124
- US-A1- 2005 211 487

## Description

### TECHNICAL FIELD

The present invention relates to a work machine including a traveling machine body, an engine bonnet provided to the traveling machine body in an openable/closable manner and defining an engine room, and an engine provided in the engine room.

### BACKGROUND ART

JP 2005 029124 A, which comprises the features mentioned in the preamble of claim 1, discloses a tractor including a motor, i.e. an engine, a radiator provided in front of the motor, a cooling fan provided between the motor and the radiator, and a bonnet hood.

JP H08 268105 A discloses working vehicle including a bonnet state detection switch for stopping a motor, i.e. engine, when a bonnet is opened.

JP 10-67253 A discloses a vehicle having a cut switch for disconnecting an ignition circuit in the engine room. In the vehicle, an actuating member of the cut switch is provided to the bonnet, and when the bonnet is operated to be opened, the ignition circuit is cut off to thereby prohibit driving of the engine.

In this type of art, as a switch is disposed in the vicinity of an engine bonnet defining an engine room, the switch is disposed in a space having a relatively high temperature, whereby the switch is required to have high heat durability.

### SUMMARY

In view of the above-described problem, it is desirable to provide a work machine capable of regulating driving of the engine when the engine bonnet is opened, without requiring excessively high heat durability for a switch.

A work machine according to the present invention includes a traveling machine body; an engine bonnet provided to the traveling machine body in an openable and closable manner and defining an engine room; an engine provided in the engine room; a radiator provided in the engine room; and a switch configured to enable the engine to be driven when the engine bonnet is closed, and regulate driving of the engine when the engine bonnet is opened. The radiator and the engine are disposed in this order from the upstream side of a cooling air passage in the engine room, and the switch is disposed upstream of the radiator in the cooling air passage.

In this description, "regulating driving of the engine" includes regulating starting of the stopped engine, and regulating further driving of the engine having been started (driven).

As such, if the engine is stopped, "prohibiting starting of (making it impossible to start) the engine" is included. If the engine is driven, "prohibiting driving of (stopping) the engine" is included.

It should be noted that "regulating driving of the engine" is not limited to prohibiting starting or driving of the engine. For example, as an operation to start the engine when the engine bonnet is opened, an operation other than the operations to be performed when the engine bonnet is closed may be required additionally. Further, in the case of operating the engine bonnet to open it when the engine is driven, an operation other than the operation to open the engine bonnet may be required additionally, in order to continue driving of the engine.

With this configuration, the switch is disposed on the upstream side in the cooling air passage. As a result, the switch is disposed in a region having a relatively low temperature where the cooling air passes through, whereby the switch is less affected by the heat of the engine. Consequently, the switch is not required to have excessively high heat durability.

In the configuration described above, it is preferable that the switch is disposed in a lower part of the cooling air passage.

With this configuration, as the switch is disposed in a lower part where the atmospheric temperature is particularly low, the switch can be disposed in a more preferable environment.

In the configuration described above, it is preferable that a shroud with which the engine room is partitioned into a first region and a second region is provided, the first region being a front side and the second region being a rear side in a longitudinal direction of the traveling machine body, that the radiator is disposed in the first region along a transversal direction of the traveling machine body, that the engine is disposed in the second region, that a cooling fan is provided to an opening formed in the shroud, the cooling fan generating an air flow from the first region to the second region, and that the switch is provided in the first region.

With this configuration, the engine room is partitioned, by the shroud, into the first region where the radiator is disposed and the second region where the engine is disposed, and the switch is disposed in the first region. As the heat of the engine to the first region is shielded by the shroud, the switch is disposed in a more preferable environment.

In the configuration described above, the switch includes a switch element provided to the traveling machine body and having a pressed part; a first operation member provided to the traveling machine body and configured to operate the pressed part by pressing the pressed part; and a second operation member provided to the engine bonnet and configured to operate the first operation member, that the engine room has a first space extending in the longitudinal direction of the traveling machine body between the radiator and at least one side part of the engine bonnet, and that the second operation member moves within the first space along with operations to open and close the engine bonnet.

With this configuration, the second operation member moves in a region where the radiator is not present in the longitudinal direction of the traveling machine body. As such, there is no need to provide, for example, the second operation member at a high position in order to prevent interference between the second operation member and the radiator, which increases the degree of freedom in arranging the switch.

In the configuration described above, it is preferable that a space in which the switch is disposed is a second space extending in a transversal direction of the traveling machine body, the transversal direction being a longitudinal direction of the second space, that the first operation member is disposed along the longitudinal direction in such a manner that a first end of the first operation member is positioned in the vicinity of the pressed part and that a second end of the first operation member is positioned in the vicinity of a side face of the engine bonnet in a closed state, and that the second operation member is fixed to the engine bonnet so as to be positioned in the vicinity of a side part of the engine bonnet.

Generally, in a work machine, an elongated space extending in a transversal direction of the traveling machine body may be present on the upstream side of the radiator in the engine room. In that case, by adopting the configuration described above, it is possible to dispose the switch in a preferable manner by using such a space.

### BRIEF DESCRIPTION OF THE DRAWINGS

Fig. 1 is an overall side view of a mowing machine.
Fig. 2 is an overall plan view of the mowing machine.
Fig. 3 is a perspective view of an engine bonnet and a partition wall.
Fig. 4 is a side view inside an engine room.
Fig. 5 is a plan view inside the engine room.
Fig. 6 is a diagram showing a lock mechanism of the engine bonnet.
Fig. 7 is an exploded perspective view of the engine bonnet.
Fig. 8 is a perspective view of the engine bonnet.
Fig. 9 is a cross-sectional side view showing a mounting structure of a front wall part of the engine bonnet.
Fig. 10 (A) is a diagram showing a switch when the bonnet is opened.
Fig. 10 (B) is a diagram showing the switch when the bonnet is closed.
Fig. 11 is a perspective view of the switch.
Fig. 12 is a diagram showing an open/close operation of the engine bonnet.
Fig. 13 is a perspective view of a switch of another exemplary embodiment.
Fig. 14 (A) is a diagram showing the switch of the other exemplary embodiment when an engine bonnet is opened.
Fig. 14 (B) is a diagram showing the switch of the other exemplary embodiment when the engine bonnet is closed.

### EXEMPLARY EMBODIMENTS

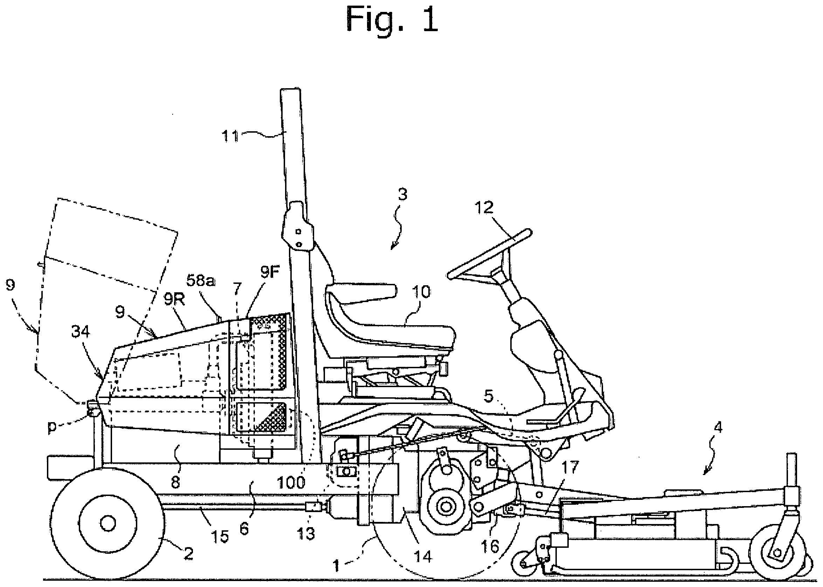

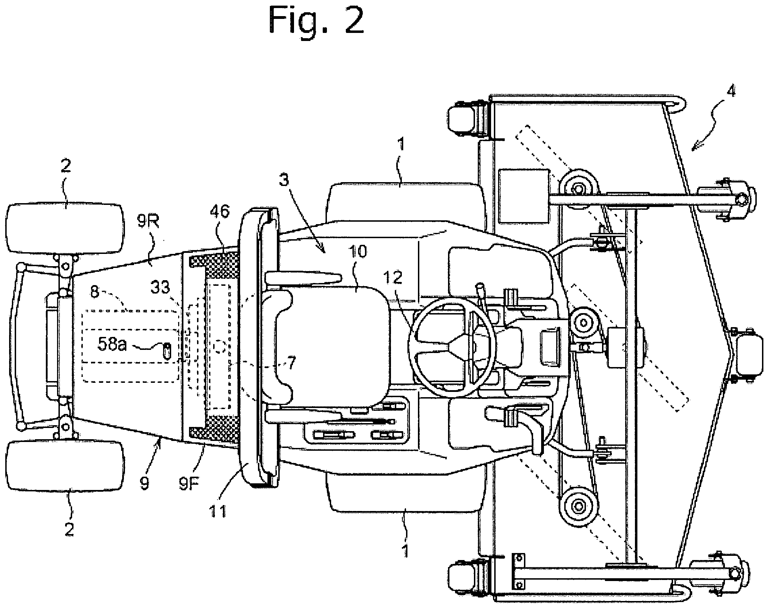

As an exemplary embodiment of a work machine of the present invention, description will be given on a mowing machine. Fig. 1 shows a side view of a mowing machine, and Fig. 2 shows a plan view of the mowing machine. The mowing machine includes a traveling machine body 3, and a pair of right and left front wheels 1 and a pair of right and left rear wheels 2 supporting the traveling machine body 3. In the present embodiment, the direction of the front wheels 1 is fixed, while the rear wheels 2 are steerable. The traveling machine body 3 is provided with a mower 4 having bar blades, which is connected to the front of the traveling machine body 3. The mower 4 is connected to the traveling machine body 3 in a liftable manner via a hydraulically-driven lift arm 5.

The traveling machine body 3 includes a pair of right and left main frames. A water-cooled engine 8 is mounted in a rear portion of the main frames 6, and a radiator 7 is disposed in front of the engine. In a rear portion of the traveling machine body 3, an engine bonnet 9 covering the engine 8 and the engine auxiliary machinery such as the radiator 7 is provided. The engine bonnet 9 is supported in an openable/closable and swingable manner around a fulcrum p in a rear lower portion of the engine bonnet. A driver's seat 10 is provided in front of the engine bonnet 9 in a closed state. An arched fall-prevention frame 11 is provided between the engine bonnet 9 and the driver's seat 10 in a closed state. A steering handle 12 for steering the rear wheels 2 is provided in front of the driver's seat 10.

The power taken forward from the engine 8 is transmitted to a hydraulic static transmission (HST) 13 provided in the front portion of the machine body and, after a continuously variable speed change, the power is input to a mission case 14 directly linked to the HST 13, and is decelerated by the gears in the mission case 14 and transmitted to the front wheels 1. The power is branched in the mission case 14, and the travel system power taken rearward is transmitted to the rear wheels 2 via a transmission shaft 15.

Part of the engine power input to the hydraulic static transmission 13 is directly transmitted to the PTO transmission system of the mission case 14 without any speed change. The speed of the power transmitted to the PTO transmission system is changed by the gears appropriately, and then the power is transmitted to a PTO shaft 16 provided in a protruding manner in a rear portion of the mission case 14. The power transmitted to the PTO shaft 16 is transmitted to the mower 4 via the transmission shaft 17.

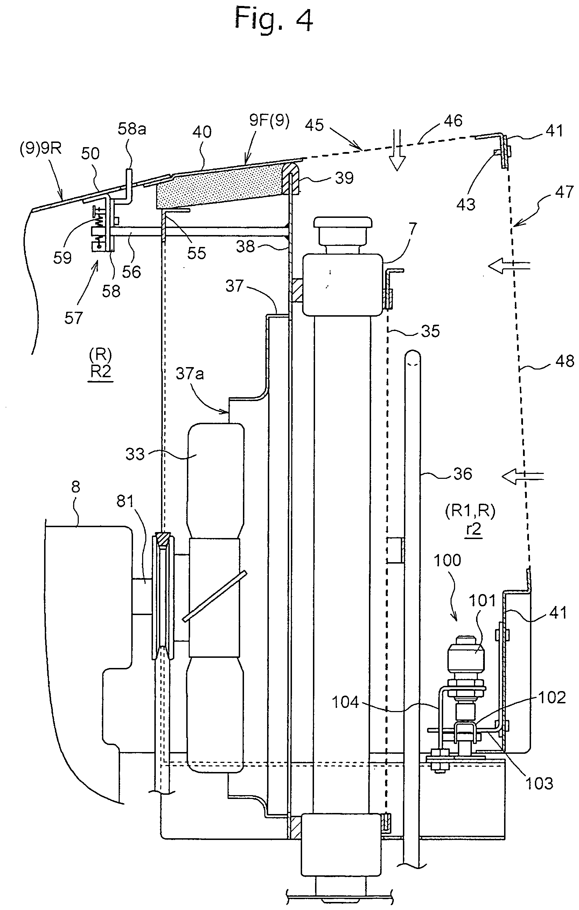

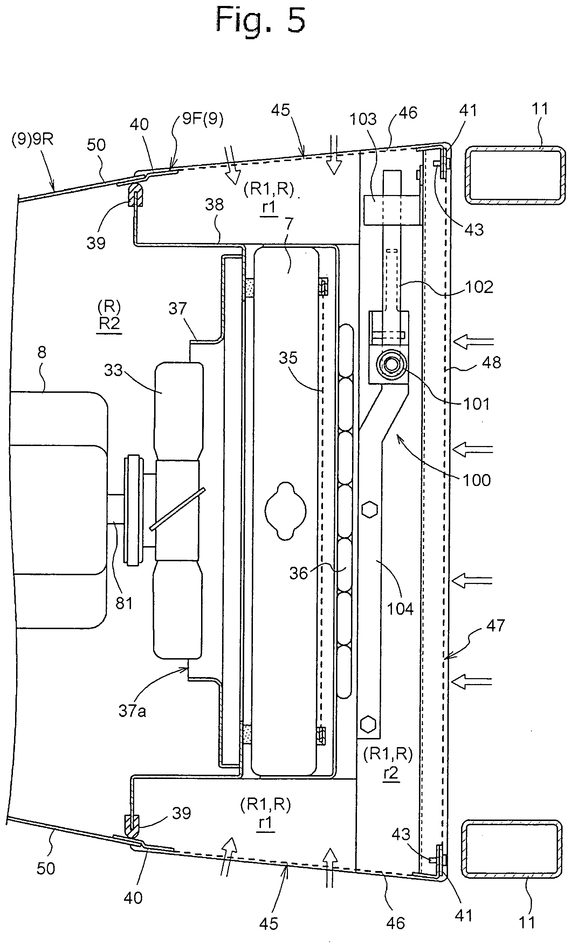

Hereinafter, the internal structure of the engine bonnet 9 will be described. As shown in Figs. 4 and 5, an engine room R is defined by the engine bonnet 9. Inside the engine room R, the engine 8 and the engine auxiliary machinery such as the radiator 7 are provided. A cooling fan 33 is disposed between the radiator 7 and the engine 8. The cooling fan 33 is connected to an output shaft 81 of the engine 8 in an associated manner by means of a belt power transmission mechanism, for example. It should be noted that the cooling fan 33 may be provided to the output shaft 81 of the engine 8. In front of the radiator 7, an oil cooler 36 for cooling the hydraulic oil of the hydraulic system is provided. The oil cooler 36 is in a shape of a meandering pipe. Further, a fine-mesh filter 35 is disposed between the oil cooler 36 and the radiator 7 in such a manner that the filer 35 can be drawn upward.

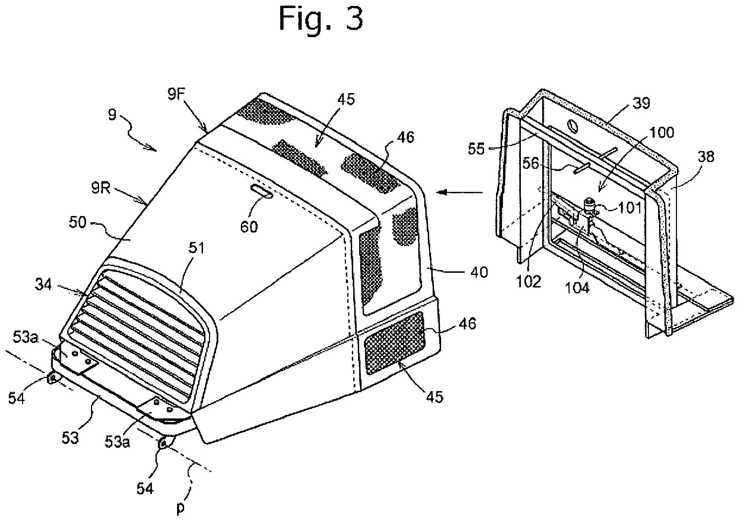

In the rear of the radiator 7, a fan shroud 37 surrounding the cooling fan 33 is provided. A partition wall 38 is provided as an outer part of the fan shroud 37. By the partition wall 38, the engine room R is partitioned into a first region R1 on the front side and a second region R2 on the rear side. As such, the oil cooler 36 and the radiator 7 are disposed in the first region R1 of the engine room R, and the engine 8 is disposed in the second region R2 of the engine room R. To the outer peripheral end of the partition wall 38, a rubber seal 39 is attached. With the rubber seal 39 being closely attached to the inner face of the engine bonnet 9 in a closed state, hot air of the engine in the second region is prevented from flowing inversely into the front side of the radiator 7 in the first region. As shown in Figs. 3 and 5, the partition wall 38 is formed such that the center portion connecting with a center part of the fan shroud 37 is positioned near the rear end of the radiator 7, while the right and left side portions are bent rearward. With the arrangement described above, the first region R1 of the engine room R includes a space r1 extending in a longitudinal direction of the traveling machine body between a side wall of the engine bonnet 9 and the radiator 7, and a space r2 extending in a transversal direction of the traveling machine body between a front wall part 41 of the engine bonnet 9 and the radiator 7.

By the cooling fan 33, ambient air is taken in from the rearward space of the driver's seat 10, and after being led by the radiator 7, the ambient air is made to flow rearward within the engine room R and then to the outside of the machine from a louver air exhaust port 34 (see Fig. 3) formed at the back end of the engine bonnet 9.

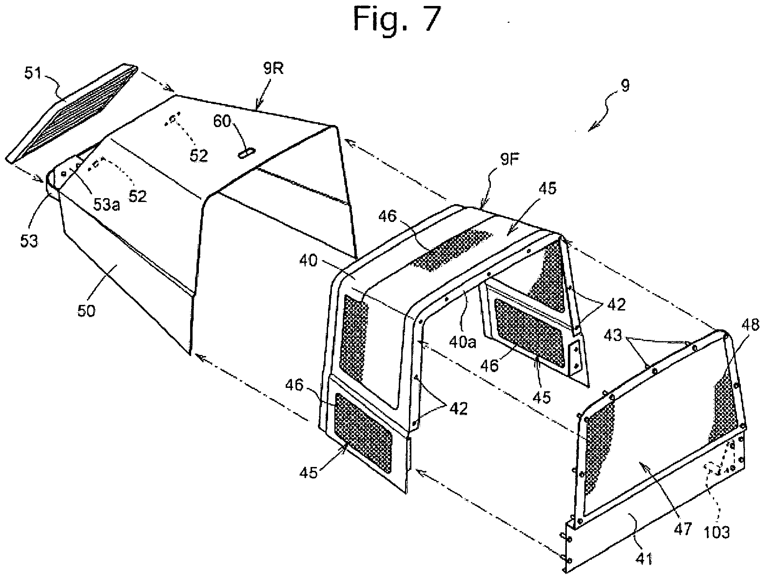

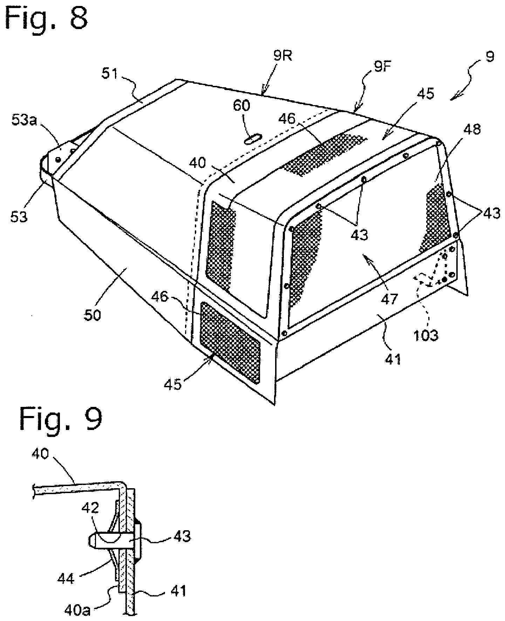

As shown in Figs. 7 and 8, in the present embodiment, the engine bonnet 9 is configured such that a front bonnet part 9F and a rear bonnet part 9R are joined. As shown in Fig. 1, the engine bonnet 9 is configured to be openable/closable as a whole in a swingable manner in an up and down direction about the fulcrum p in the rear lower part.

The front bonnet part 9F is configured such that the front wall part 41 is connected to the front end of a main body part 40, which is made of a steel plate, formed by being pressed to be in a tunnel shape having a top face and right and left side faces. The front end of the main body part 40 have a connection flange 40a formed by being folded inward, and a plurality of connection holes 42 which are formed at appropriate positions on the connection flange 40a. The front wall part 41 is made of a steel plate having a small flexed step across the full width of an intermediate portion between the top and the bottom, and is provided with a plurality of connection pins 43, protruding inward, on the periphery thereof. The connection pins 43 are provided corresponding to the connection holes 42 of the main body part 40. By inserting each of the connection pins 43 to the corresponding connection hole 42 and retaining it, the front wall part 41 is able to be connected to the entire face of the front end of the main body part 40. As shown in Fig. 9, by applying detachable stoppers 44 such as snap washers to the connection pins 43 inserted in the connection holes 42, if the front wall part 41 is deformed or damaged, it is possible to take off the front wall part 41 to repair or replace it.

The top face and the right and left side faces of the main body part 40 have air intake ports 45, to each of which a dust removal net 46 made of a punching steel plate with countless numbers of punched pores is attached. The upper portion of the front wall part 41 also has an air intake port 47, to which a dust removal net 48 made of a punching steel plate is attached. Thereby, clean ambient air in which dust is removed, through these air intake ports 45 and 47 formed in the front bonnet part 9F, is supplied to the radiator 7.

The rear ends of the air intake ports 45, formed in the main body part 40, are set so as to be positioned along the peripheral end of the flexed partition wall 38. The rear ends of the air intake ports 45 on the right and left side faces are positioned rearward of the front end position of the radiator 7, whereby the air intake areas of the right and left sides are increased.

The rear bonnet part 9R is configured such that a rear grill 51 having the air exhaust port 32 is connected to the front end of a main body part 50 which is made of a steel plate formed to be in a tunnel shape having a top face and right and left side faces. The right and left sides of the rear end of the main body part 50 are provided with mounting chips 52 protruding inward, and in a rear portion of the main body part 50, a stay 53 extending between the lateral walls is provided at an intermediate part between the top and the bottom. The rear grill 51 is connected by bolts to the mounting chips 52 and the front end of the stay 53. The stay 53 has mounting seats 53 on right and left positions, to which hinge fittings 54 constituting the fulcrum p is mounted.

The rear bonnet part 9R is configured to have an outer shape such that the top face is downwardly inclined in the rear in a side view, and the right and left side faces are inclined to be in a shape in which the rear becomes narrower in a plan view, and the steerable rear wheels 2 sandwiching the rear portion of the engine bonnet 9 are disposed with a small tread. This makes a small turn by the machine body easy.

The rear end of the front bonnet part 9F is fitted in the front end of the rear bonnet part 9R configured as described above, and is joined by spot welding at appropriate positions in a circumferential direction. The top face of the front bonnet part 9F is downwardly inclined in the rear in a gentler manner than the inclination of the top face of the rear bonnet part 9R, and the right and left side faces of the front bonnet part 9F are formed to be in a shape in which the rear becomes narrower in a gentler manner than the right and left side faces of the rear bonnet part 9R. The top face and the right and left side faces of the connected portion between the front bonnet part 9F and the rear bonnet part 9R are bent in an outwardly protruding manner. As such, in the connected portion, the front bonnet part 9F and the rear bonnet part 9R are overlapped, and due to the rib effect provided by bending the portion in an outwardly protruding manner, high rigidity is achieved. As the portion having high rigidity, extending from the right and left side faces to the top face, is formed at the intermediate part between the front and the rear of the engine bonnet 9, the rigidity of the entire engine bonnet 9 is enhanced.

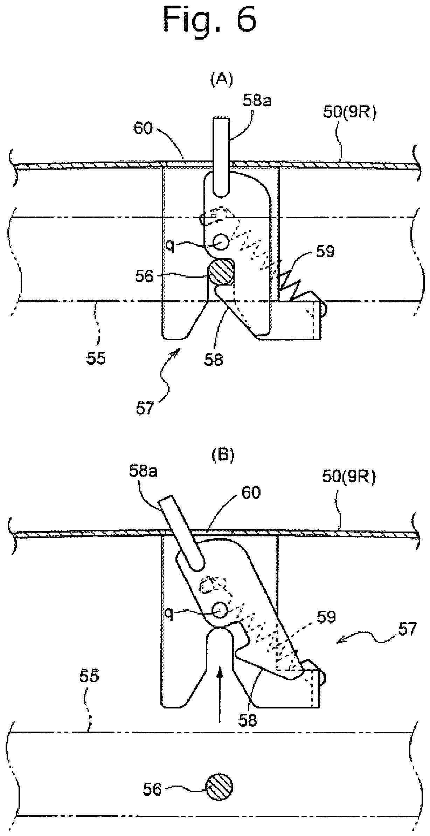

The upper portion at the rear end of the partition wall 38 is reinforced with a stay 55 connecting the flexed portions on the right and left sides. An engagement pin 56 fixedly connected at the center of the upper portion of the partition wall 38 penetrates the stay 55 so as to protrude rearward, and a lock mechanism 57, which engages/disengages with the rear protruding portion of the engagement pin 56, is provided at the center of the front portion of the rear bonnet part 9R of the engine bonnet 9. As shown in Fig. 6, the lock mechanism 57 is configured such that a hook-like lock fitting 58, supported swingably around a fulcrum q in a front-back direction, is energized to engage with the engagement pin 56 by a spring 59. An operation lever 58a extending upward from the lock fitting 58 protrudes upward from an opening 60 formed in the top face of the engine bonnet 9. Accordingly, by only letting the engine bonnet 9 to be swung downward, the lock mechanism 57 operates so as to automatically realize an engaged and locked state at a closed position, while by releasing the lock by turning the operation lever 58a sideways against the spring 59, the engine bonnet 9 is allowed to be opened upward swingably. In the present embodiment, the lock mechanism 57 is provided at an almost center position in a longitudinal direction of the traveling machine body 3 and at an almost center position in a transversal direction of the traveling machine body 3 in the engine bonnet 9.

As shown in Figs. 4 and 5, a switch 100 is provided in the cooling air passage to the radiator 7, that is, in the space r2 extending in a transversal direction of the traveling machine body between the front wall part 41 of the engine bonnet 9 and the radiator 7. In this example, the switch 100, the oil cooler 36, the radiator 7, and the engine 8 are disposed in this order from the upper stream side of the cooling air passage (from the front side in a longitudinal direction of the traveling machine body 3).

The switch 100 is connected to the ignition circuit of the engine 8. When the engine bonnet 9 is closed, the switch is turned on (the ignition circuit is closed), which enables the engine 9 to be started. In contrast, when the engine bonnet 9 is opened, the switch is turned off (ignition circuit is opened), which prevents the engine 9 from being started.

In the present embodiment, by operations of the cooling fan 33, ambient air is taken in from the front portion of the engine bonnet 9, that is, from the air intake ports 45 and 47 formed in the front bonnet part 9F, and the ambient air (cooling air) is supplied to a first region R1 of the engine room R. The cooling air supplied to the first region R1 passes through the space r2 where the switch 100 is disposed, the oil cooler 36, and the radiator 7, and then, is supplied to a second region R2 of the engine room R via an opening 37a of the fan shroud 37. The cooling air supplied to the second region R2 passes through the engine 8, and then, is exhausted to the outside from the air exhaust port 32 of the rear bonnet part 9R.

As described above, the switch 100 is disposed in the upper stream part of the cooling air passage. In the present embodiment, the switch 100 is disposed ahead of the radiator 7 and the oil cooler 36 disposed in front of the radiator 7.

Hereinafter, an example of the switch 100 will be described. The switch 100 is disposed in the vicinity of one side part (in the present embodiment, on the left side as viewed toward the front of the traveling machine body 3) of the engine bonnet 9. It should be noted that although in the present embodiment the switch 100 is disposed on the left side as viewed toward the front of the traveling machine body 3 as an example in which the switch 100 is disposed on one side inside the engine bonnet 9, the location where the switch 100 is disposed is not limited to this location. The switch 100 may be disposed on the right side as viewed toward the front of the traveling machine body 3. The switch 100 is not necessarily disposed on one side of the engine bonnet 9. The switch 100 may be disposed at any location if it is in the cooling air passage inside the engine bonnet 9, such as a center portion in a lateral direction inside the engine bonnet 9.

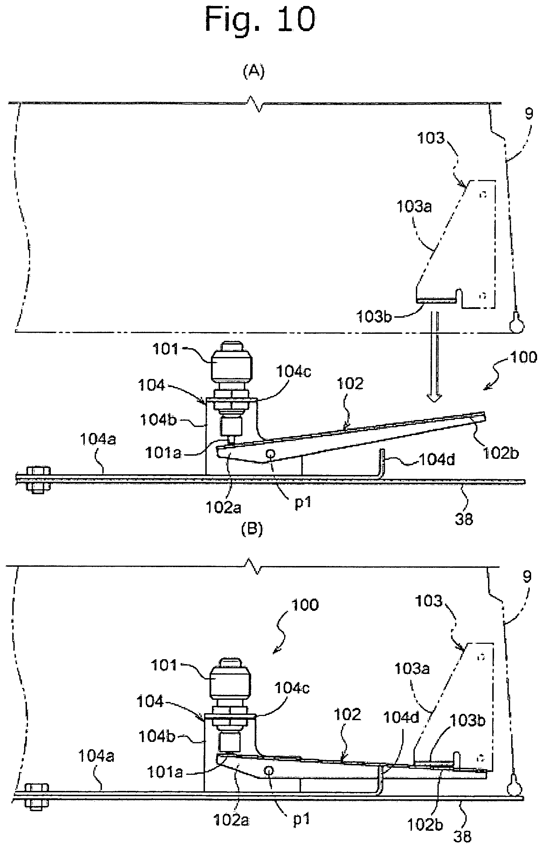

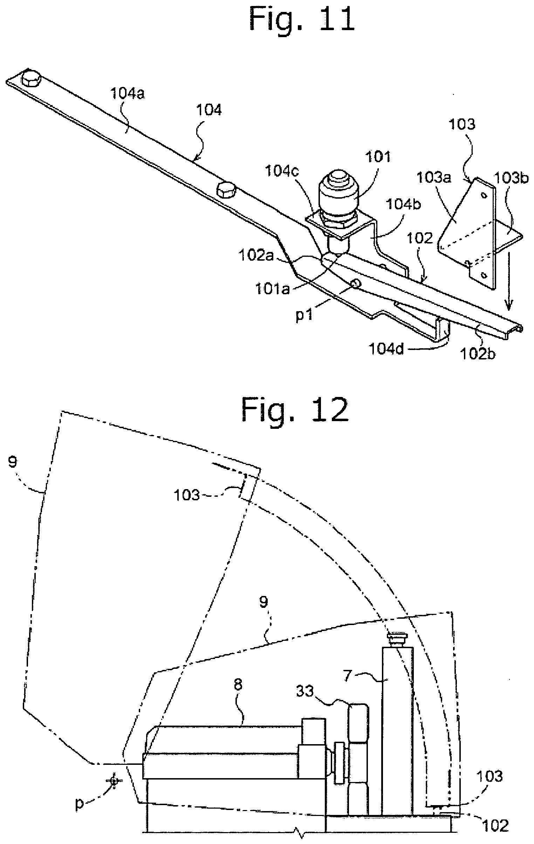

As shown in Figs. 10 and 11, the switch 100 includes a switch element 101 provided to the traveling machine body 3, a first operation member 102 provided to the traveling machine body 3 and configured to operate the switch element 101 by pressing it, a stay 104 to which the switch element 101 and the first operation member 102 are attached, and a second operation member 103 provided to the engine bonnet 9 and configured to operate the first operation member 102 by pressing it. The stay 104 includes a bottom plate part 104a fixed to the traveling machine body 3, a vertical plate part 104b extending upward from the bottom plate part 104a, and a top plate part 104c extending almost horizontal to the bottom plate part 104a from the top end of the vertical plate part 104b.

The switch element 101 is fixed to the top plate part 104c. In this structure, a pressed part 101a of the switch element 101 is positioned between the top plate part 104c and the bottom plate part 104a. Further, the first operation member 102 is supported by the vertical plate part 104b in a swingable manner around a pivot p1. A first end 102a on the switch element side of the first operation member 102 is positioned below the pressed part 101a. A second end 102b, opposite to the first end 102a, of the first operation member 102 extends outward beyond the end of the bottom plate part 104a. In the present embodiment, a stopper 104d is formed at the end of the bottom plate part 104a. The stopper 104d comes into contact with the first operation member 102 from below so as to control the swing of the first operation member 102. It should be noted that the stopper 104d is not necessarily provided. If the stopper 104d is not provided, the tip of the second end 102b of the first operation member 102 may directly come into contact with the traveling machine body 3 so as to control the swing. It is also possible that the engine bonnet 9 and the traveling machine body 3 come into contact with each other so as to serve as a stopper indirectly.

As shown in Figs. 3 and 5, the switch 100 is disposed ahead of the radiator 7 inside the engine bonnet 9 (engine room R), in a state where the longitudinal direction of the stay 104 and the first operation member 102 is positioned along the transversal direction of the traveling machine body 3. In the present embodiment, the switch 100 is disposed facing the lower portion of the front wall 41 of the engine bonnet 9. This means that the switch 100 is disposed at a relatively low position in the cooling air passage.

The second end 102b of the first operation member 102 extends to the vicinity of one side part of the engine bonnet 9. In the vicinity of the one side part of the engine bonnet 9, the second operation member 103 is provided. In the present embodiment, the second operation member 103 is a plate-like member. The second operation member 103 includes a fixed part 103a fixed to the engine bonnet, and an acting part 103b which acts on the first operation member 102. As shown in Fig. 8, in the present embodiment, the fixed part 103a of the second operation member 103 is fixed to the lower portion of the front wall 41, in the vicinity of one side part, of the engine bonnet 9. Thereby, the acting part 103b of the second operation member 103 is positioned in the vicinity of a side face of the engine bonnet 9.

The pressed part 101a of the switch element 101 is energized to a side where the pressed part 101a protrudes (off side in this embodiment), by an elastic member such as a spring, for example. As shown in Fig. 10(A) and Fig. 10(B), when the engine bonnet 9 is closed, the acting part 103b of the second operation member 103 comes into contact with the second end 102b of the first operation member 102 from the above, and the first operation member 102 swings around the pivot p1. At this moment, the first end 102a of the first operation member 102 swings upward so as to press the pressed part 101a of the switch element 101. Thereby, the switch element 101 is turned on (Fig. 10(B)). Thereby, the ignition circuit is closed, which enables the engine 8 to be started.

On the other hand, when the engine bonnet 9 is opened, the pressing against the second end 102b of the first operation member 102 by the acting part 103b of the second operation member 103 is released, and the pressing against the pressed part 101a of the switch element 101 by the first end 102a of the first operation member 102 is released. Thereby, the pressed part 101a projects by the pressing force of the elastic member, and the switch element 101 is turned off (Fig. 10(A)). Thereby, the ignition circuit is opened, which prevents the engine 8 from being started.

With the above-described configuration, in the present embodiment, the second operation member 103 moves in the space r1 extending in a longitudinal direction of the traveling machine body between the side wall of the engine bonnet 9 and the radiator 7, along with open-close operation of the engine bonnet 9. As such, although the moving locus of the second operation member 103 overlaps with the radiator 7 in a side view as shown in Fig. 12, the second operation member 103 is able to move securely within the space r1 in practice, without interfering with the radiator 7.

In the present embodiment, the distance from the pivot p1 of the first operation member 102 to the second end 102b is set to be longer than the distance from the pivot p1 to the first end 102a. This means that a swing stroke of the second end 102a, when the first operation member 102 swings about the pivot p1, is larger than a swing stroke of the first end 102a. This makes swing errors of the first operation member 102, caused by assembling errors of the engine bonnet 9 and attachment errors of the second operation member 103, fall within the range of a pressing stroke of the pressed part 101a of the switch element 101. Further, the stopper 104 controls swinging of the first operation member 102 such that the pressed part 101a is allowed to be positioned before the stroke end (projected position) at a position where the switch element 101 is turns on, when the engine bonnet 9 is closed. This prevents the pressed part 101a from being pressed excessively.

### Other Exemplary Embodiments

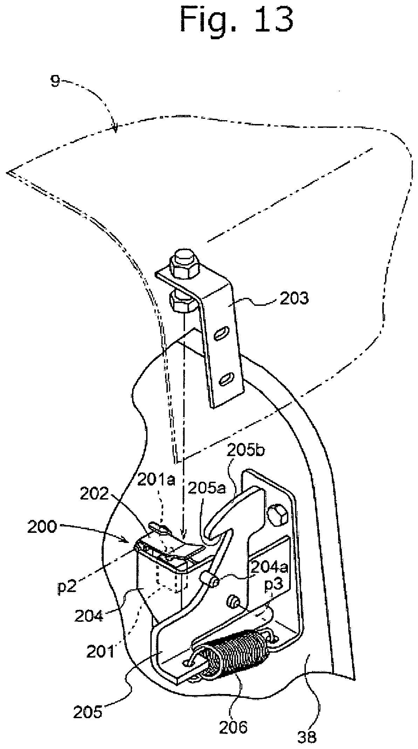

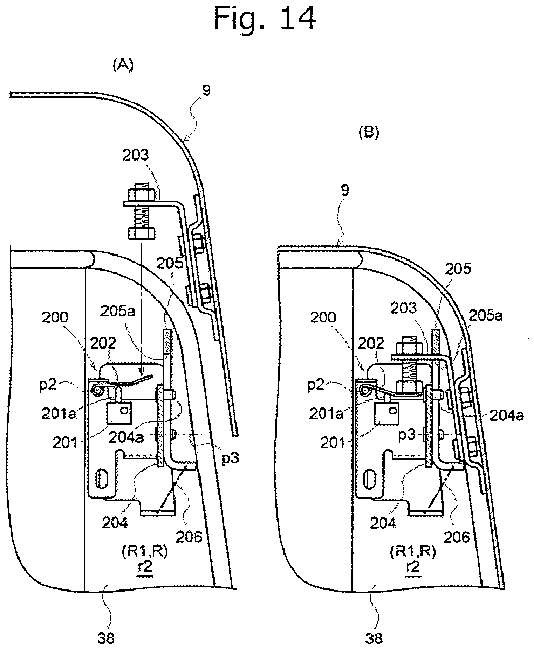

(1) The specific configuration of a switch is not limited to that of the above-described embodiment. For example, configurations shown in Figs. 13, 14(A), and 14(b) may be used. In a switch 200, a switch element 201 is fixed to the partition wall 38, for example. To be specific, a stay 204 is fixed to the partition wall 38, and the switch element 201 is fixed to the stay. In this embodiment, the switch element 201 is fixed to the stay 204 such that a pressed part 201a faces upward. Further, a first operation member 202 is provided above the switch element 201 on the stay 204. The first operation member 202 is supported by the stay 204 swingably about a pivot p2.
   To the side wall of the engine bonnet 9, a second operation member 203 is fixed. The second operation member 203 comes into contact with the first operation member 202 from the above along with closing operation of the engine bonnet 9 so as to allow the first operation member to swing downward.
   The stay 204 is also provided with a lock member 205 for locking the second operation member 203 at a position where the switch element 201 is turned on (closed position of the engine bonnet). The lock member 205 is supported by the stay 204 swingably about a pivot p3. The lock member 205 includes a locking recess portion 205a into which the second operation member is fitted when the engine bonnet 9 is closed. The lock member 205 also includes a guide face 205b which guides the second operation member 203 to the locking recess portion 205a along with closing operation of the engine bonnet 9. A spring 206 is provided between the lock member 205 and the stay. The stay 204 is also provided with a stopper 204a which comes into contact with the lock member 205. The lock member 205 is positioned by the elasticity of the spring 206 and the stopper 204a (see Fig. 13).
   As shown in Figs. 13 and 14(A), in the switch 200, the second operation member 203 moves from the upper part toward the first operation member 202, along with closing operation of the engine bonnet 9. At this moment, the second operation member 203 comes into contact with the guide face 205b from the above, and slides on the guide face 205b while rotating the lock member 205 about the pivot p3 against the elasticity of the spring 206. Then, as shown in Fig. 14(B), the second operation member 203 enters the locking recess portion 205a and comes into contact with the first operation member 202 from the above. When the second operation member 203 enters the locking recess portion 205a, the contact from the above by the second operation member 203 with the guide face 205b is released, whereby the lock member 205 returns to the original position due to the elasticity of the spring 206, and the lock member 205 comes into contact with the second operation member 203 from the above. Thereby, the second operation member 203 is held in a state where the second operation member 203 comes into contact with the first operation member 202 from the above, and the switch element is maintained in an on state when the engine bonnet 9 is closed.
(2) While description has been given on a riding-type mowing machine as an example of a work machine in the above-described embodiment, the present invention is not limited to this embodiment. For example, the present invention is applicable to various types of work machines having an openable/closable engine bonnet such as a tractor.
(3) While description has been given on the case where the switch element 101 is connected to the ignition circuit in the above-described embodiment, the present invention is not limited to this form. For example, the switch element 101 may detect open/close of the engine bonnet 9, and based on the detection result, if the bonnet is opened, a controller such as an engine ECU may regulate driving of the engine. In that case, it is possible to detect a state where the engine bonnet is opened when the switch element 101 is on, in contrast to the above-described example.
(4) While description has been given on the case where the engine 8 is prevented from being started as an example of regulating starting of the engine 8 when the engine bonnet 9 is opened in the above-described embodiment, regulation of starting of the engine 8 is not limited to this example. For example, when the engine bonnet 9 is opened, another operation such as operating an engine start allowing switch may be required to start the engine 8, in addition to the engine driving operation to be required when the engine bonnet 9 is closed.
(5) Further, while description has been given on the case of regulating starting of the engine 8 as an example of "regulating driving of the engine", it is possible to stop the engine 8 if the engine 8 has been driven. This means that a configuration in which the engine is stopped if the engine bonnet 9 is opened in a state where the engine is driven, is also acceptable. Meanwhile, in the case of operating the engine bonnet 9 to be opened while continuing driving of the engine 8, the present invention may be configured to require another operation such as operating an engine drive allowing switch when the engine bonnet 9 is opened, in addition to the opening operation of the engine bonnet 9.
(6) While description has been given on the configuration in which the front bonnet part 9F and the rear bonnet part 9R are joined as an example of the engine bonnet 9, the present invention is not limited to this configuration. An integrally formed engine bonnet 9 may be used.

### DESCRIPTION OF REFERENCE NUMEALS

- 3: traveling machine body
- 7: radiator
- 8: engine
- 9: engine bonnet
- 100: switch
- 101: switch element
- 101a: pressed part
- 102: first operation member
- 102a: first end
- 102b: second end
- 103: second operation member
- R: engine room
- R1: first region
- R2: second region
- r1: space (first space)
- r2: space (second space)

### INDUSTRIAL APPLICABILITY

The present invention is applicable to a work machine having an openable/closable engine bonnet.

## Claims

1. A work machine comprising:
a traveling machine body (3);
an engine bonnet (9) provided to the traveling machine body (3) in an openable and closable manner and defining an engine room (R);
an engine (8) provided in the engine room (R);
a radiator (7) provided in the engine room (R);
wherein
the radiator (7) and the engine (8) are disposed in this order from an upstream side of a cooling air passage in the engine room (R),
**characterized in that** the work machine comprises
a switch (100, 200) configured to enable the engine (8) to be driven when the engine bonnet (9) is closed, and regulate driving of the engine (8) when the engine bonnet (9) is opened, wherein the switch (100, 200) is disposed upstream of the radiator (7) in the cooling air passage,
the switch (100) includes:
a switch element (101) provided to the traveling machine body (3) and having a pressed part (101a);
a first operation member (102) provided to the traveling machine body (3) and configured to operate the pressed part (101a) by pressing the pressed part (101a); and
a second operation member (103) provided to the engine bonnet (9) and configured to operate the first operation member (102),
the engine room (R) has a first space (r1) extending in the longitudinal direction of the traveling machine body (3) between the radiator (7) and at least one side part of the engine bonnet (9), and
the second operation member (103) moves within the first space (r1) along with operations to open and close the engine bonnet (9).

2. The work machine according to Claim 1, wherein
the switch (100, 200) is disposed in a lower part of the cooling air passage.

3. The work machine according to Claim 1 or 2, further comprising
a shroud (37) with which the engine room (R) is partitioned into a first region (R1) and a second region (R2), the first region (R1) being a front side and the second region (R2) being a rear side in a longitudinal direction of the traveling machine body (3), wherein
the radiator (7) is disposed in the first region (R1) along a transversal direction of the traveling machine body (3),
the engine is disposed in the second region (R2),
a cooling fan (33) is provided to an opening formed in the shroud (37), the cooling fan (33) generating an air flow from the first region (R1) to the second region (R2), and
the switch (100, 200) is provided in the first region (R1).

4. The work machine according to Claim 1, wherein
a space in which the switch (100) is disposed is a second space (r2) extending in a transversal direction of the traveling machine body (3), the transversal direction being a longitudinal direction of the second space (r2),
the first operation member (102) is disposed along the longitudinal direction in such a manner that a first end (102a) of the first operation member (102) is positioned in the vicinity of the pressed part (101a) and that a second end (102b) of the first operation member (102) is positioned in the vicinity of a side face of the engine bonnet (9) in a closed state, and
the second operation member (103) is fixed to the engine bonnet (9) so as to be positioned in the vicinity of a side part of the engine bonnet (9).

## Patentansprüche

1. Eine Arbeitsmaschine, die Folgendes umfasst:
einen Körper (3) einer fahrbaren Maschine;
eine Motorhaube (9), die für den Körper (3) der fahrbaren Maschine auf eine zu öffnende und zu schließende Weise und derart bereitgestellt wird, dass sie einen Motorraum (R) definiert;
einen Motor (8), der im Motorraum (R) bereitgestellt wird;
einen Kühler (7), der im Motorraum (R) bereitgestellt wird;
wobei
der Kühler (7) und der Motor (8) in genau dieser Reihenfolge, ausgehend von einer stromaufwärtigen Seite eines Kühlluftkanals im Motorraum (R) angeordnet sind,
**dadurch gekennzeichnet, dass** die Arbeitsmaschine Folgendes umfasst:
einen Schalter (100, 200), der konfiguriert ist, um dem Motor (8) zu ermöglichen, betrieben zu werden, wenn die Motorhaube (9) geschlossen ist, und um den Betrieb des Motors (8) zu steuern, wenn die Motorhaube (9) geöffnet ist,
wobei:
der Schalter (100, 200) stromaufwärts vom Kühler (7) im Kühlluftkanal angeordnet ist,
der Schalter (100) Folgendes beinhaltet:
ein Schalterelement (101), der für den Körper (3) der fahrbaren Maschine bereitgestellt wird und ein Pressteil (101a) aufweist;
ein erstes Betätigungselement (102), das für den Körper (3) der fahrbaren Maschine bereitgestellt wird und dazu konfiguriert ist, das Pressteil (101a) zu betätigen, indem es das Pressteil (101a) presst; und
ein zweites Betätigungselement (103), das für die Motorhaube (9) bereitgestellt wird und dazu konfiguriert ist, das erste Betätigungselement (102) zu betätigen,
der Motorraum (R) einen ersten Raum (r1) aufweist, der in Längsrichtung des Körpers (3) der fahrbaren Maschine zwischen dem Kühler (7) und zumindest einem Seitenteil der Motorhaube (9) verläuft, und wobei
das zweite Betätigungselement (103) sich innerhalb des ersten Raumes (r1) bei Betätigungen zur Öffnung und Schließung der Motorhaube (9) bewegt.

2. Die Arbeitsmaschine nach Anspruch 1, wobei
der Schalter (100, 200) in einem unteren Teil des Kühlluftkanals angeordnet ist.

3. Die Arbeitsmaschine nach Anspruch 1 oder 2, die des Weiteren Folgendes umfasst:
eine Abdeckung (37), mit der der Motorraum (R) in einen ersten Bereich (R1) und einen zweiten Bereich (R2) untergliedert wird, wobei der erste Bereich (R1) eine Vorderseite und der zweite Bereich (R2) eine Rückseite in Längsrichtung des Körpers (3) der fahrbaren Maschine ist,
wobei:
der Kühler (7) im ersten Bereich (R1) entlang einer Querrichtung des Körpers (3) der fahrbaren Maschine angeordnet ist,
der Motor im zweiten Bereich (R2) angeordnet ist,
ein Kühlgebläse (33) für eine in der Abdeckung (37) gebildete Öffnung bereitgestellt wird, wobei das Kühlgebläse (33) einen Luftfluss ausgehend vom ersten Bereich (R1) hin zum zweiten Bereich (R2) erzeugt, und wobei
der Schalter (100, 200) im ersten Bereich (R1) bereitgestellt wird.

4. Die Arbeitsmaschine nach Anspruch 1, wobei
ein Raum, in dem der Schalter (100) angeordnet ist, ein zweiten Raum (r2) ist, der in einer Querrichtung des Körpers (3) der fahrbaren Maschine verläuft, wobei die Querrichtung eine Längsrichtung des zweiten Raums (r2) ist,
das erste Betätigungselement (102) entlang der Längsrichtung derart angeordnet ist, dass sich ein erstes Ende (102a) des ersten Betätigungselements (102) in der Nähe des Pressteils (101a) befindet, und dass sich ein zweites Ende (102b) des ersten Betätigungselements (102) in der Nähe einer Seitenfläche der Motorhaube (9) im geschlossenen Zustand befindet, und wobei
das zweite Betätigungselement (103) an der Motorhaube (9) befestigt ist, sodass es sich in der Nähe eines Seitenteils der Motorhaube (9) befindet.

## Revendications

1. Une machine de travail, comprenant:
un corps de machine mobile (3) ;
un capot de moteur (9) prévu pour le corps de machine mobile (3) de manière à pouvoir être ouvert et fermé et définissant un compartiment moteur (R) ;
un moteur (8) fourni dans le compartiment moteur (R) ;
un radiateur (7) fourni dans le compartiment moteur (R) ;
sachant que
le radiateur (7) et le moteur (8) sont disposés dans cet ordre à partir d'un côté en amont d'un passage d'air de refroidissement dans le compartiment moteur (R),
**caractérisée en ce que** la machine de travail, comprend :
un commutateur (100, 200), qui est configuré pour permettre au moteur (8) d'être actionné quand le capot de moteur (9) est fermé, et pour réglementer l'actionnement du moteur (8) quand le capot de moteur (9) est ouvert,
sachant que
le commutateur (100, 200) est disposé en amont du radiateur (7) dans le passage d'air de refroidissement,
le commutateur (100) inclut ;
un élément de commutateur (101) prévu pour le corps de machine mobile (3) et présentant une pièce comprimée (*pressed*) (101a) ;
un premier élément opérationnel (102) prévu pour le corps de machine mobile (3) et configuré pour actionner la pièce comprimée (101a) par pression de la pièce comprimée (101a) ; et que
un deuxième élément opérationnel (103) prévu pour le capot de moteur (9) et configuré pour actionner le premier élément opérationnel (102),
le compartiment moteur (R) présente un premier espace (r1) qui s'étend dans la direction longitudinale du corps de machine mobile (3) entre le radiateur (7) et au moins une partie latérale du capot de moteur (9), et que
le deuxième élément opérationnel (103) se déplace à l'intérieur du premier espace (r1) conjointement avec des opérations d'ouverture et de fermeture du capot de moteur (9).

2. La machine de travail d'après la revendication 1, sachant que
le commutateur (100, 200) est disposé dans une partie inférieure du passage d'air de refroidissement.

3. La machine de travail d'après la revendication 1 ou 2, comprenant en outre
une enveloppe (37) avec laquelle le compartiment moteur (R) est subdivisé en une première zone (R1) et une deuxième zone (R2), la première zone (R1) étant une face frontale et la deuxième zone (R2) étant une face arrière dans une direction longitudinale du corps de machine mobile (3),
sachant que
le radiateur (7) est disposé dans le première zone (R1) le long d'une direction transversale du corps de machine mobile (3),
le moteur est disposé dans la deuxième zone (R2),
une soufflante de refroidissement (33) est prévue pour une ouverture formée dans l'enveloppe (37), la soufflante de refroidissement (33) générant un écoulement d'air à partir de la première zone (R1) jusqu'à la deuxième zone (R2),
et que
le commutateur (100, 200) est fourni dans la première zone (R1).

4. La machine de travail d'après la revendication 1, sachant que
un espace, dans lequel le commutateur (100) est disposé, est un deuxième espace (r2) qui s'étend dans une direction transversale du corps de machine mobile (3), sachant que la direction transversale est une direction longitudinale du deuxième espace (r2),
le premier élément opérationnel (102) est disposé le long de la direction longitudinale de manière qu'une première extrémité (102a) du premier élément opérationnel (102) soit positionnée à proximité de la pièce comprimée (101a) et qu'une deuxième extrémité (102b) du premier élément opérationnel (102) soit positionnée à proximité d'une face latérale du capot de moteur (9) en état fermé, et que
le deuxième élément opérationnel (103) est fixé au capot de moteur (9) de manière à être positionné à proximité d'une partie latérale du capot de moteur (9).
